# FASCICULE DE BREVET EUROPEEN

(11) **EP 0 698 462 B1**
(45) Date de publication et mention de la délivrance du brevet: **23.05.2001**
(21) Numéro de dépôt: 95630095.8
(22) Date de dépôt: 11.08.1995
(51) Int. Cl.: B29B 17/02, B29B 13/06, C08G 63/80, C08G 63/90

(54) **Procédé de traitement de déchets de polytéréphtalate d'éthylène et installation pour la mise en oeuvre de ce procédé**
Verfahren zur Wiederverwendung der P.E.T.-Abfällen, und Anlage zur Durchführung des Verfahrens
Process for the re-use of P.E.T. waste material, and installation for carrying out the process

(30) Priorité: 23.08.1994 LU 88522; 30.03.1995 LU 88597
(43) Date de publication de la demande: 28.02.1996
(73) Titulaire: ECO SELECTA ITALIA S.r.L., Salorno (IT)
(72) Inventeur: Rippl, Harald, D-92637 Weiden (DE)
(74) Mandataire: Weyland, J.J. Pierre

(56) Documents cités:
- EP-A- 0 336 520
- FR-A- 2 310 852
- FR-A- 2 622 833
- DATABASE WPI Week 8517 Derwent Publications Ltd., London, GB; AN 85-099348 (17) XP002009005 & DD-A-216 723 (VEB CHEMIEFASERWERK GUBEN "HERBERT WARNKE") , 19 Décembre 1984
- DATABASE WPI Section Ch, Week 8839 Derwent Publications Ltd., London, GB; Class A, AN 88-275351 (39) XP002009006 & JP-A-63 202 408 (TOSHIBA MACHINE) , 22 Août 1988
- DATABASE WPI Section Ch, Week 8741 Derwent Publications Ltd., London, GB; Class AG, AN 87-288219 (41) XP002009007 & JP-A-62 201 205 (KONISHIROKU PHOTO K.K. ET MITSUBISHI HEAVY IND. K.K.) , 4 Septembre 1897

## Description

La présente invention concerne un procédé et une installation pour le recyclage d'objets composés d'un polymère thermoplastique comprenant plusieurs phases de préparation du polymère thermoplastique faisant l'objet du recyclage, pour le transformer en un produit de base composé de copeaux exempts d'agents polluants, comprenant une phase d'élimination des copeaux des microparticules aqueuses qu'ils contiennent. une phase d'exposition des copeaux déshydratés à une température de fluidification optimale pour former un produit homogène, une phase de désaération du produit fluidifié, et une phase d'extrusion du produit fluidifié et désaéré et de son refroidissement à une température prédéterminée pour atteindre une cristallisation optimale.

Un tel procédé est par exemple décrit dans le brevet EP 0336520.

Il est connu que le recyclage du matériau composant des objets d'une forme quelconque (par exemple des bouteilles pour contenir et transporter des liquides), réalisés avec des polymères thermoplastiques, par exemple avec une résine polyester saturée, pouvant être du polytéréphtalate d'éthylène (PET), permet normalement d'obtenir un produit composé d'une pluralité de copeaux du matériau recyclé, pratiquement exempts d'éléments polluants, comme par exemple de colles, de carton et d'autres produits étrangers se trouvant à l'origine sur l'objet dont le matériau vient d'être recyclé.

Les copeaux ainsi obtenus peuvent être réutilisés si on les ajoute. dans des proportions plus ou moins importantes, en fonction des exigences. à un produit vierge (par exemple du PET) en vue de la réalisation de nouveaux objets.

Le fait que lesdits copeaux (PET recyclé) ne peuvent être utilisés que dans une partie minimale provient surtout du fait que leurs caractéristiques chimiques et physiques sont inférieures à celles du produit vierge. n'admettant donc pas leur réutilisation à 100% mais uniquement une réutilisation partielle, garantissant tous les types de traitements auxquels le matériau recyclé est avant tout destiné.

Dans cette situation, on comprend facilement que l'utilisation d'un pourcentage de copeaux de produit recyclé (PET recyclé) entraîne toutefois d'une part une baisse des propriétés chimiques et physiques du matériau composant le nouvel objet par rapport aux propriétés du matériau vierge. ainsi que des inconvénients éventuels correspondants lors du traitement. sans permettre d'autre part une baisse notable des coûts de la production des objets produits seulement en partie avec du matériau recyclé.

Dans cette situation, la tâche technique devant être remplie par la présente invention consiste à remédier aux inconvénients techniques ci-dessus.

Dans le cadre de cette tâche technique, un objectif important de la présente invention consiste à fournir un procédé et une installation pour le recyclage d'objets composés d'un polymère thermoplastique, dans lequel le polymère thermoplastique recyclé (par exemple du PET) est réutilisé de façon presque totale en vue de la production de nouveaux objets.

Un autre objectif de l'invention consiste à réaliser un procédé et une installation pour le recyclage d'objets composés d'un polymère thermoplastique, permettant de produire les mêmes objets que ceux réalisés avec un matériau vierge non recyclé.

Un objectif supplémentaire de l'invention consiste à réaliser un procédé et une installation pour le recyclage d'objets composés d'un polymère thermoplastique, permettant de produire un produit présentant des caractéristiques chimiques et physiques vraiment supérieures à celles du produit vierge par le fait qu'il a subi, lors du procédé de recyclage, une meilleure cristallisation, ayant entraîné une amélioration de ses capacités de traitement grâce à l'amélioration de la flexibilité et de la résistance du matériau.

Un dernier objectif important de l'invention consiste à fournir un procédé et une installation pour le recyclage des objets composés d'un polymère thermoplastique, présentant une haute valeur écologique et permettant en outre une baisse notable des coûts de fabrication des produits industriels recyclés de consommation courante.

La tâche technique indiquée t les objectifs spécifiés sont en substance remplis par un procédé caractérisé en ce qu'une phase de précristallisation est effectuée simultanément à la phase d'élimination des microparticules aqueuses.

Ledit procédé peut être exécuté avec une installation telle que décrite dans la revendication 13.

D'autres caractéristiques et avantages de l'invention ressortiront sur la base de la description d'une forme de réalisation préférée mais non pas exclusive d'un procédé et d'une installation pour le recyclage d'objets composés d'un polymère thermoplastique selon l'invention, illustrée à titre indicatif et non pas limitatif dans les dessins annexés, dans lesquels:
la figure 1 est une vue schématique de l'installation selon l'invention;
la figure 2 est une vue schématique en élévation latérale de la machine d'extrusion du polymère thermoplastique selon l'invention;
la figure 3 est une vue en élévation latérale de la vis d'extrusion selon l'invention; et
les figures 4 et 5 sont des vues détaillées de certaines parties de la vis d'extrusion selon l'invention.

L'objet composé d'un polymère thermoplastique subit en premier lieu une série de traitements pour le débarrasser des agents polluants qu'il peut contenir, par exemple du carton, des colles et d'autres agents similaires, jusqu'à l'obtention d'un produit composé d'un polymère thermoplastique, par exemple d'une résine polyester saturée, plus précisément de polytéréphtalate d'éthylène ou de ses dérivés (PET), sous forme de copeaux et de poudre.

Au cours d'une phase successive a lieu la séparation mécanique des copeaux de la poudre, produite au cours de leur réalisation, par l'intermédiaire d'une opération de tamisage à dépression, pour obtenir ainsi un produit de base composé uniquement de copeaux, par exemple de PET.

Au cours d'une phase successive, les copeaux sont soumis à un traitement de déshydratation à l'air sec, pour éliminer de ceux-ci les éventuelles microparticules aqueuses qu'ils contiennent, et ils sont soumis simultanément à un traitement de précristallisation.

Au cours de la phase d'élimination des microparticules aqueuses et de précristallisation des copeaux, ces derniers sont agités en continu en vue d'empêcher leur agrégation, risquant de constituer une masse impossible à traiter simultanément aux deux traitements ci-dessus.

La déshydratation et la précristallisation des copeaux se font par insufflation à contre-courant d'air sec ayant un degré d'humidité, une température et un débit prédéterminés.

On a constaté qu'au cours de cette phase de déshydratation et de précristallisation des copeaux de polymère thermoplastique, l'humidité relative de l'air sec permettant d'obtenir les meilleurs résultats présente une valeur du point de rosée comprise entre -35° et -65°C.

La valeur du point de rosée optimale est de préférence de -50 °C.

La température de l'air sec est par contre comprise entre 90° et 160°C, et correspond de préférence à environ 130°C, tandis que le débit de l'air sec est compris entre 3 et 12 mètres cubes par heure pour chaque kilogramme de copeaux devant être déshydratés et précristallisés, avec une hauteur moyenne de 250 à 300 millimètres de colonne d'eau.

Dans le cas où l'on désire faire des économies d'énergie, sans atteindre la température ci-dessus, il est possible d'effectuer un traitement thermique à chaud préalable des copeaux, en vue d'éliminer dans une large mesure la quantité de microparticules aqueuses qu'ils contiennent.

Dans ce cas, le traitement à chaud préalable sera effectué à une température comprise entre 35° et 75°C, de préférence à une température de 60°C.

Les copeaux, ayant été déshydratés et précristallisés au cours d'un traitement simultané, sont ensuite transférés en une quantité dosée prédéterminée à l'orifice d'alimentation d'une machine à extruder où ils sont soumis à une température Tf de fluidification.

Au cours de ce transfert, les copeaux sont de préférence toujours exposés à un flux d'air sec ayant une température, un degré d'humidité et une débit prédéterminés.

Ce maintien des copeaux dans l'air sec est possible grâce au fait que l'orifice de la machine d'extrusion est connecté de façon étanche à un dispositif de dosage des copeaux, connecté son tour de façon étanche à la chambre à l'intérieur de laquelle sont effectués en même temps les traitements de déshydratation et de précristallisation.

Après l'élimination d'un quelconque élément polluant des copeaux et après leur déshydratation et précristallisation, ils sont exposés à une température Tf de fluidification optimale pour former un produit homogène qui sera désaéré au cours d'une phase successive, et, après avoir été fluidifié et désaéré comme indiqué ci-dessus, soumis à l'extrusion, et, après l'extrusion, refroidi à une température prédéterminée en vue d'atteindre une cristallisation optimale.

Au cours des phases de fluidification, de désaération et d'extrusion, le produit homogène est de préférence soumis à une opération pratiquement continue de mélange, en présence d'une température et d'une pression prédéterminées, comme décrit plus en détail ci-dessous.

Il faut noter en outre qu'au cours de cette opération de mélange, le produit homogène doit présenter un degré de fluidité restant pratiquement constant dans le temps.

Il faut noter en particulier qu'au cours d'une première phase de mélange, le produit homogène, composé par exemple de PET, est soumis à une pression P1 et à une température théorique établie T1, la valeur P1 étant pratiquement comprise entre 20 et 80 bars, et étant de préférence pratiquement égale à 50 bars, la température T1 étant comprise entre 265 et 285°C, de préférence pratiquement égale à 275°C.

Au cours de la deuxième phase de mélange du produit homogène, celui-ci est exposé à une pression P2 comprise entre 30 et 50 bars, de préférence pratiquement égale à 40 bars, et à une température T2 établie comprise entre 255 et 275°C, de préférence pratiquement égale à 265°C.

Au cours d'une troisième phase de mélange, le produit homogène est exposé à une pression P3 comprise entre 60 et 150 bars et à une température T3 comprise entre 260 et 280°C, de préférence pratiquement égale à 270°C.

La phase de désaération du produit est effectuée en présence de la température T2 et de la pression P2.

La phase d'extrusion du produit fluidifié et désaéré est réalisée par contre en présence d'une pression P4 comprise entre 150 et 250 bars, en moyenne égale à 200 bars, et à une température établie T4 comprise entre 265° et 285°C, de préférence pratiquement égale à 275°C.

La vitesse d'acheminement du polymère thermoplastique, en particulier du PET, est en outre de préférence moins élevée lorsque le produit est transféré vers la phase de désaération, tandis qu'elle augmente après cette dernière phase, lorsque le produit est transféré vers la phase d'extrusion.

L'exemple ci-dessous sert à illustrer l'invention à titre explicatif mais non pas limitatif.

### EXEMPLE I

On utilise 100 kg de copeaux mélangés à de la poudre, par exemple du type PET 07333 de la société RETECH, P.O.B. 191 61 90 AD BEEK, Pays-Bas, provenant par exemple de conteneurs de polytéréphtalate d'éthylène ou de ses dérivés (PET).

Les fragments de PET sont introduits pendant au moins 5 minutes à l'intérieur d'un dépoussiéreur du type mécanique à tamis oscillant à dépression, à contre-courant de hauteur élevée.

Les copeaux ainsi séparés de la poudre sont ensuite transportés par l'intermédiaire de moyens traditionnels vers un appareil capable d'exécuter en même temps une déshydratation et une précristallisation desdits copeaux pendant un temps compris entre 4 et 6 heures, à une température comprise entre 90 et 160°C, avec un débit d'air de 7 mètres cubes par heure par kilogramme, avec une valeur du point de rosée de -55°C.

Les copeaux déshydratés sont alors introduits automatiquement dans un circuit hermétique défini par un dispositif de dosage, type DTM 200, produit par la TECNOTRADING s.r.l., de S.Maria du Sala (VE), en vue de produire une quantité de copeaux de 1.670 grammes (en référence aux 100 kg de l'exemple) par minute, avec une linéarité maximale, dans une machine d'extrusion, dont la vis d'extrusion spéciale tourne à une vitesse de 80 tours par minute.

Le produit traverse ensuite une filière, par exemple à 12 trous, avant d'être immédiatement refroidi par immersion dans un fluide d'une température réglée pendant environ 4 secondes.

On atteint ainsi une cristallisation parfaite et homogène du produit qui sera ensuite découpé avec une machine à couper, type T 150, produite par la MECCANOPLASTICA di Mazza & C s.a.s. de Castiglione Olona (VA), en vue d'un stockage définitif.

### EXEMPLE II

On utilise 100 kg de copeaux mélangés à de la poudre, par exemple du type PET 07333 de la société RETECH, P.O.B. 191 61 90 AD BEEK, Pays-Bas, provenant par exemple de conteneurs de polytéréphtalate d'éthylène ou de ses dérivés (PET).

Les fragments de PET sont introduits pendant 5 minutes à l'intérieur d'un dépoussiéreur du type mécanique à tamis oscillant à dépression. Les copeaux sont ensuite préchauffés et transportés par l'intermédiaire de moyens traditionnels vers un dispositif de désaération et de précristallisation desdits copeaux, selon les phases déjà décrites dans l'exemple 1.

Les copeaux sont ensuite introduits par l'intermédiaire d'un circuit hermétiquement fermé dans un dispositif de dosage, type DTM 200, produit par la TECNOTRADING s.r.l. di S.Maria di Sala (VE), en vue de produire une quantité de copeaux de 1.670 grammes (en référence aux 100 kg de l'exemple) par minute dans une machine d'extrusion, dont la vis d'extrusion tourne à une vitesse de 80 tours par minute.

Le produit traverse ensuite une filière, par exemple à 12 trous, avant d'être refroidi immédiatement par immersion dans un fluide d'une température réglée pendant environ 4 secondes.

Le produit sera ensuite découpé avec une machine à couper, type T 150, produite par la MECCANOPLASTICA di Mazza & C. s.a.s. de Castiglione Olona (VA), en vue du stockage définitif.

Le procédé décrit ci-dessus est exécuté avec une installation, désignée globalement par la référence 50, pour le recyclage d'un objet composé d'un polymère thermoplastique comprenant au moins une machine 54 définie par un dispositif de déshydratation pour exécuter un traitement thermique et au moins une machine d'extrusion 1 du polymère thermoplastique.

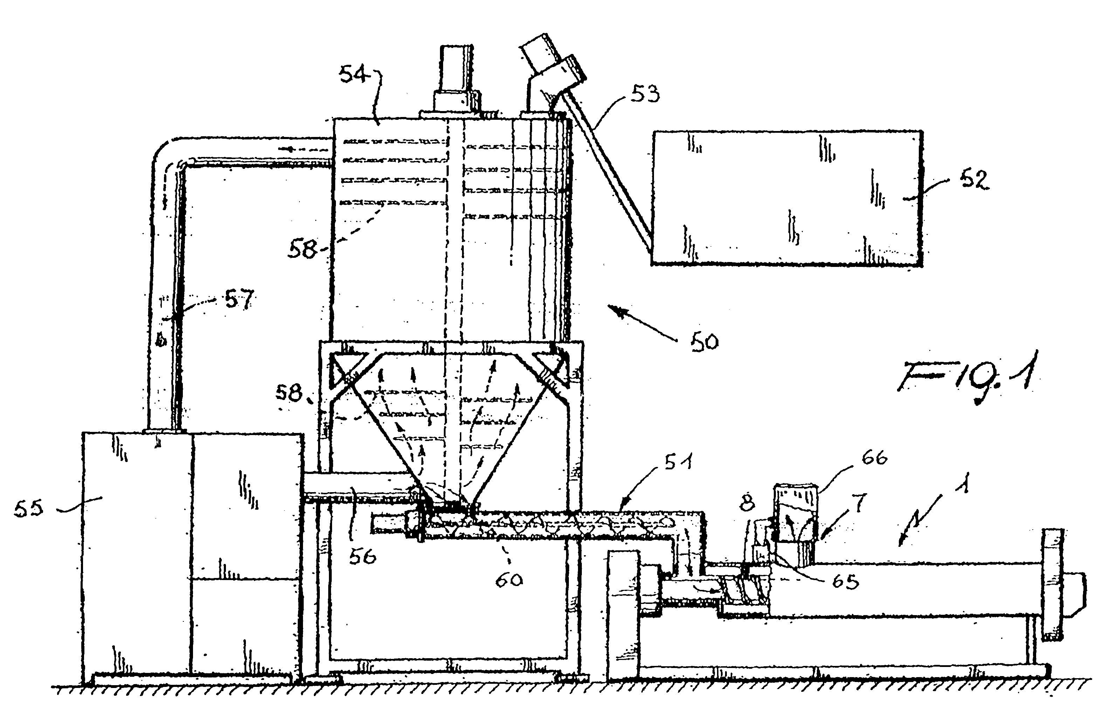

Comme indiqué dans la figure 1, il est préférable que les deux machines 54 et 1 soient connectées de façon étanche dans l'installation, par l'intermédiaire d'un dispositif de dosage 51, permettant une alimentation prédéterminée de la machine à extruder.

En d'autres termes, la machine pour le traitement thermique 54, la machine à extruder 1 et le dispositif de dosage 51 forment pratiquement un corps unique, dans lequel le polymère thermoplastique et en particulier les copeaux de PET sont en continu exposés à un flux d'air sec ayant un degré d'humidité, une température et un débit prédéterminés.

L'installation 50 comprend un dépoussiéreur 52 mécanique, dans lequel la poudre est enlevée des copeaux par l'intermédiaire d'un tamis vibrant à dépression, à contre-courant de préférence.

Sans venir en contact avec l'environnement, les copeaux passent du dépoussiéreur 52, par exemple par l'intermédiaire d'une vis sans fin 53, dans la partie supérieure du dispositif de déshydratation 54.

Le dispositif de déshydratation 54 exécute simultanément une opération de précristallisation et de déshydratation des copeaux en les exposant à un contre-courant, avec un flux d'air sec provenant d'un dispositif de séchage 55.

Le dispositif de séchage 55 est relié de façon étanche au dispositif de déshydratation 54 par l'intermédiaire d'un canal 56 de transfert d'air sec, ayant les caractéristiques indiquées ci-dessus, et d'un canal 57 de retour de l'air humide.

Au cours de la phase de précristallisation et de déshydratation des copeaux dans le dispositif de déshydratation 54, ces derniers sont mélangés en continu par l'intermédiaire de pales 58.

Du dispositif de déshydratation 54, les copeaux déshydratés et précristallisés passent au dispositif de dosage 51, ensemble avec une fraction du flux d'air sec provenant du canal 56.

Le dispositif de dosage 51 prévoit pour le transport réglé des copeaux un transporteur à vis 60 ou un transporteur semblable. Du dispositif de dosage 51, les copeaux, qui sont toujours isolés de l'atmosphère environnante, passent directement à l'extrudeuse 1, ensemble avec la fraction du flux d'air sec constamment présent dans le dispositif de dosage.

L'air sec sera enfin expulsé de l'extrudeuse à travers les organes de désaération 11.

Les organes de désaération sont de préférence équipés d'une pompe 65, qui, en créant une dépression, décharge ledit air dans un circuit fermé 66 refroidi à l'eau à une température réglée.

La machine d'extrusion, désignée en général par le numéro de référence 1, comporte un orifice d'entrée 2 et un orifice de sortie 3, à proximité duquel est agencée une filière 4 à travers laquelle on fait passer le polymère thermoplastique.

La machine d'extrusion présente en particulier des moyens de chauffage 5 pour la fusion du polymère thermoplastique à un degré de fluidité prédéterminé, des moyens de mélange et d'acheminement 6 du polymère thermoplastique de l'orifice d'entrée vers l'orifice de sortie, et des moyens de désaération 7 du polymère thermoplastique, agencés entre l'orifice d'entrée et l'orifice de sortie.

Les moyens de mélange et d'acheminement sont de préférence définis par une vis d'extrusion, désignée par le numéro de référence 8, conçue de sorte à permette la variation de la vitesse d'acheminement et de la pression du polymère thermoplastique entre l'orifice d'entrée et les moyens de désaération 7 et entre ces derniers et l'orifice de sortie 3.

La vis d'extrusion présente en fait une première zone "A" comportant des organes d'alimentation contrôlée du polymère thermoplastique, indiqués en général par le numéro de référence 9, une deuxième zone "B", comportant des organes de dépôt et des premiers organes de transport du polymère thermoplastique, désignés en général par le numéro de référence 10, une troisième zone "C", comportant des organes de désaération du polymère thermoplastique, désignés dans l'ensemble par la référence 11 et une quatrième zone "D", comportant des deuxièmes organes de transport 12 du polymère thermoplastique désaéré vers la filière 4.

Les organes d'alimentation contrôlée sont en particulier définis par un canal 13 s'étendant de façon hélicoïdale dans la première zone "A" de la vis d'extrusion et communiquant avec l'orifice d'entrée 2.

Les organes de dépôt comprennent une paroi arquée 14 définissant une poche 25. agencée à proximité du canal hélicoïdal 13, en vue de pouvoir prélever le polymère thermoplastique sortant de celui-ci dans une quantité prédéterminée et de le transporter, par l'intermédiaire des premiers organes de transport, vers les organes de désaération 11.

Les organes de transport sont en particulier définis par un filet 15 définissant un pas de la vis égal à P1.

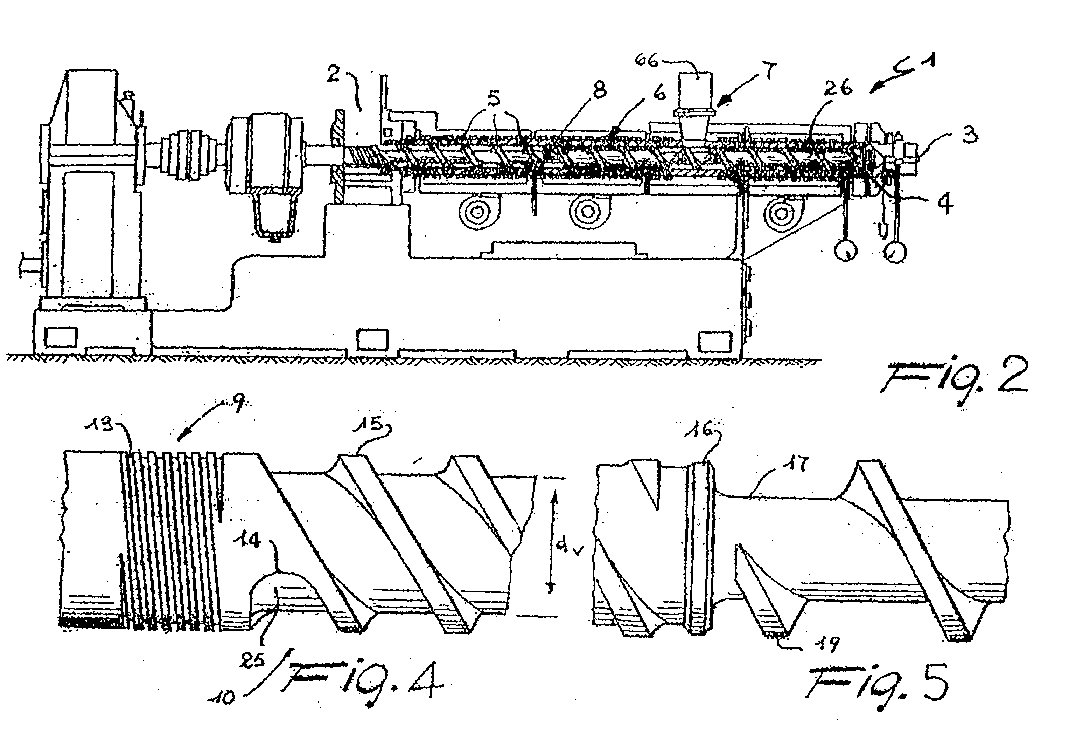

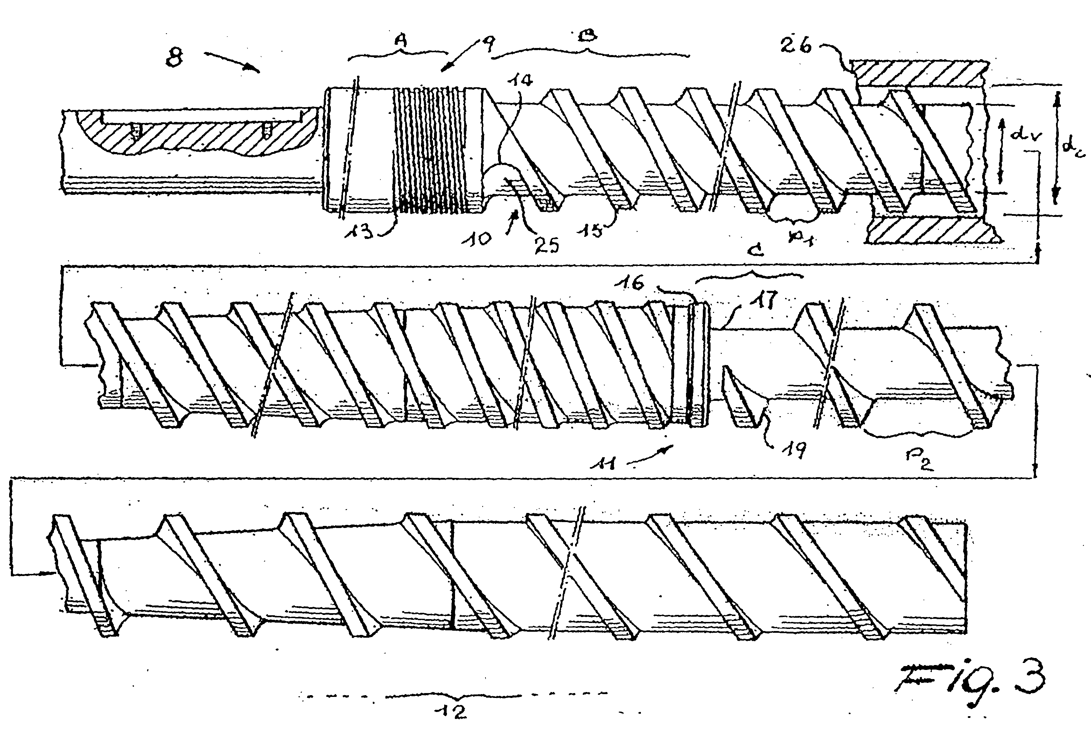

Comme il ressort clairement de la figure 2, le canal du cylindre (c'est-à-dire le canal déterminé par la distance du diamètre Dv de la vis d'extrusion et le diamètre Dc du cylindre 26 dans lequel celle-ci se déplace) diminue en outre progressivement à l'approche des organes de désaération.

La pression à laquelle est exposé le polymère thermoplastique augmente ainsi à partir de l'orifice d'entrée 2 jusqu'à atteindre des niveaux maximaux à proximité des organes de désaération 11.

Les organes de désaération comprennent une saillie annulaire 16, suivie par une chambre d'expansion 17, dans laquelle a lieu une expansion du polymère thermoplastique, avec échappement des gaz qu'il contient ainsi que de l'air sec provenant, par l'intermédiaire du dispositif de dosage 51, du dispositif de déshydratation 54, ceux-ci étant expulsés par l'intermédiaire d'un dispositif de dégazage 18 à dépression, défini par la pompe 65, vers l'extérieur de la machine d'extrusion, dans le circuit fermé 66 refroidi par eau, au cours de l'acheminement du polymère thermoplastique.

Les deuxièmes organes de transport, comprenant un filet 19 avec un pas P2 de la vis d'extrusion supérieur au pas P1 décrit ci-dessus, entrent en action à partir de la chambre d'expansion 17.

La différence entre le pas P1 et le pas P2 détermine ainsi une vitesse d'acheminement du polymère thermoplastique devant la chambre d'expansion 17 inférieure à la vitesse d'acheminement derrière la chambre d'expansion 17.

Derrière la chambre d'expansion 17, la profondeur du canal du cylindre diminue en outre progressivement en direction de la filière 4.

Le maintien d'une fluidité constante du polymère thermoplastique à l'intérieur de la machine d'extrusion est atteint par l'intermédiaire des moyens de chauffage établissant une température différente entre la première et la quatrième zone de la vis d'extrusion.

Ces moyens de chauffage peuvent être constitués par des résistances à incandescence ou, selon l'invention, par des inducteurs magnétiques haute fréquence, de façon à permettre des économies d'énergie considérables.

L'invention répond ainsi aux objectifs définis et présente de nombreux et importants avantages, comme indiqué ci-dessus.

L'invention ainsi conçue peut subir de nombreuses modifications et variations, toutes comprises dans le cadre de la présente invention telle que définie dans les revendications.

Tous les éléments peuvent en outre être remplacés par des éléments techniquement équivalents.

Les matériaux utilisés, les formes et les dimensions peuvent être d'un type quelconque, adapté aux exigences.

## Revendications

1. Procédé pour le recyclage d'objets composés d'un polymère thermoplastique comprenant plusieurs phases de préparation du polymère thermoplastique faisant l'objet du recyclage, pour le transformer en un produit de base composé de copeaux exempts d'agents polluants, comprenant une phase d'élimination des copeaux des microparticules aqueuses qu'ils contiennent, une phase d'exposition des copeaux déshydratés à une température de fluidification optimale pour former un produit homogène, une phase de désaération du produit fluidifié, une phase d'extrusion du produit fluidifié et désaéré et de son refroidissement à une température prédéterminée pour atteindre un cristallisation optimale caractérisé en ce qu'une phase de précristallisation est effectuée simultanément à la phase d'élimination des microparticules aqueuses.

2. Procédé selon la revendication 1, caractérisé en ce que pendant les phases d'élimination des microparticules aqueuses et de précristallisation simultanées les copeaux sont maintenus en continu en mouvement dans de l'air sec.

3. Procédé selon l'une quelconque des revendications précédentes, caractérisé en ce que les phases d'élimination des microparticules aqueuses et de précristallisation simultanées sont effectuées par l'intermédiaire d'insufflation en contre-courant d'air sec, ayant un degré d'humidité, une température et un débit prédéterminés.

4. Procédé selon l'une quelconque des revendications précédentes, caractérisé en ce que l'air sec présente une valeur du point de rosée comprise entre -65° et -35°C, une température comprise entre 90 et 160°C et un débit compris entre 3 et 12 mètres cubes par heure pour chaque kilogramme de copeaux.

5. Procédé selon l'une quelconque des revendications précédentes caractérisé en ce que les phases de préparation du polymère thermoplastique comprennent au moins une phase de séparation mécanique des copeaux de la poudre produite au cours de leur production, par l'intermédiaire d'une opération de tamisage à dépression.

6. Procédé selon l'une quelconque des revendications précédentes, caractérisé en ce qu'après les phases d'élimination des microparticules aqueuses et de précristallisation simultanées les particules sont transférées de façon dosée, tout en étant en continu exposées à la présence d'air sec, au moins jusqu'à la phase pendant laquelle elles sont exposées à la température de fluidification.

7. Procédé selon l'une quelconque des revendications précédentes, caractérisé en ce qu'au cours des phases de fluidification, de désaération et d'extrusion, le produit homogène est soumis à une opération pratiquement continue de mélange à une température et une pression prédéterminées.

8. Procédé selon l'une quelconque des revendications précédentes, caractérisé en ce qu'au cours de l'opération de mélange, le produit homogène présente un degré de fluidité constant.

9. Procédé selon l'une quelconque des revendications précédentes, caractérisé en ce qu'au cours d'une première phase de mélange, le produit homogène est exposé à une pression P1 et à une température T1, au cours d'une deuxième phase de mélange à une pression P2 et à une température T2, inférieures à ladite pression P1 et à ladite température T1, et au cours d'une troisième phase à une pression P3 supérieure à P2 mais inférieure à P1, et à une température T3 supérieure aux températures T2 et T1.

10. Procédé selon l'une quelconque des revendications précédentes, caractérisé en ce que la phase de désaération du produit est réalisée en présence d'une pression et d'une température égales à P2 et T2.

11. Procédé selon l'une quelconque des revendications précédentes, caractérisé en ce que la phase d'extrusion est réalisée en présence d'une pression P4 supérieure à P1, P2, P3 et à une température T4 supérieure à T1, T2 et T3.

12. Procédé selon l'une quelconque des revendications précédentes, caractérisé en ce que le polymère thermoplastique est une résine polyester saturée ou plus précisément un polytéréphtalate d'éthylène ou un des dérivés correspondants.

13. Installation pour le recyclage d'un objet composé d'un polymère thermoplastique, comprenant au moins une machine pour effectuer le traitement thermique (54) et au moins une machine d'extrusion du polymère thermoplastique (1) comportant un orifice d'entrée (2) et un orifice de sortie (3) du polymère thermoplastique, des moyens de chauffage (5) pour la fusion du polymère thermoplastique à un degré de fluidité prédéterminé, des moyens de mélange et d'acheminement (6) du polymère thermoplastique de l'orifice d'entrée (2) vers l'orifice de sortie (3), à proximité duquel est agencée une filière (4), et des moyens de désaération du polymère (7) agencés entre l'orifice d'entrée (2) et l'orifice de sortie (3) et un dispositif de dosage (51) transférant les copeaux de polymère thermoplastique à ladite machine d'extrusion (1), caractérisée en ce que l'installation comporte un dispositif de séchage (55) à partir duquel de l'air sec ayant un degré d'humidité, une température et un débit prédéterminés est insufflé dans ladite machine de traitement thermique (54) via un canal (56) débouchant dans ladite machine de traitement thermique (54) du côté opposé de l'entrée (53) de ladite machine de traitement thermique (54) de sorte que les copeaux de polymère thermoplastique sont exposés en continu à un contrecourant d'air sec ayant un degré d'humidité, une température et un débit prédéterminés.

14. Installation selon la revendication 13 caractérisée en ce que ledit dispositif de séchage (55), la au moins une machine de traitement thermique (54), la au moins une machine d'extrusion du polymère thermoplastique (1) et le dispositif de dosage (51) sont reliés de façon étanche à l'air.

15. Installation selon la revendication 13 ou 14 caractérisée en ce que des pales (58) sont prévues dans la au moins une machine de traitement thermique (54) pour assurer un mélange continu desdits copeaux.

16. Installation selon l'une des revendications 13 à 15, caractérisée en ce que les moyens de mélange et d'acheminement (6) sont définis par une vis d'extrusion (8) à pas variable, en vue de la variation de la vitesse d'acheminement et de la pression du polymère thermoplastique (9) entre l'orifice d'entrée (2) et les moyens de désaération (7) et entre les moyens de désaération (7) et l'orifice de sortie (3).

17. Installation selon la revendication 16, caractérisée en ce que la vis d'extrusion (8) présente une première zone comportant des organes d'alimentation contrôlée du polymère thermoplastique (9) et une deuxième zone comportant des organes de dépôt et des premiers organes de transport (10) du polymère thermoplastique ainsi qu'une troisième zone comportant des organes de désaération du polymère thermoplastique (11) et une quatrième zone comportant des deuxièmes organes de transport (12) du polymère thermoplastique désaéré vers la filière.

18. Installation selon l'une des revendications 13 à 17, caractérisée en ce que les organes d'alimentation contrôlée (9) sont définis par un canal hélicoïdal (13) communiquant avec l'orifice d'entrée (2).

19. Installation selon la revendication 17, caractérisée en ce que les organes de dépôt comprennent une paroi arquée (14) agencée sur la vis, à partir de laquelle s'étendent les organes de transport (10).

20. Installation selon la revendication 19, caractérisée en ce que les organes de transport (10) présentent un filet (15) définissant un pas P1 de ladite vis et une profondeur du canal du cylindre qui diminue progressivement à l'approche des organes de désaération (11).

21. Installation selon l'une des revendications 19 à 20, caractérisée en ce que les organes de désaération (11) comprennent une saillie annulaire (16) suivie par une chambre d'expansion (17) du polymère thermoplastique comportant un dispositif de dégazage (18) pour l'expulsion des gaz produits dans le canal au cours de l'acheminement du polymère thermoplastique.

22. Installation selon l'une des revendications 19 à 21, caractérisée en ce que les deuxièmes organes de transport (12) comprennent un filet (19) définissant un pas P2 de la vis et une profondeur du canal du cylindre qui diminue progressivement à l'approche de la filière (4).

23. Installation selon l'une des revendication 19 à 22, caractérisée en ce que le pas P1 de la vis d'extrusion (8) détermine une vitesse d'acheminement du polymère thermoplastique inférieure à la vitesse d'acheminement déterminée par le pas P2 de la vis d'extrusion (8).

24. Installation selon l'une des revendications 19 à 23, caractérisé en ce que lesdits moyens de chauffage (5) établissent une température différente entre lesdites première et quatrième zones de ladite vis d'extrusion (8).

25. Installation selon l'une des revendications 19 à 24, caractérisée en ce que lesdits moyens de chauffage (5) sont des inducteurs magnétiques haute fréquence.

## Claims

1. A process for recycling articles made of a thermoplastic polymer, comprising a plurality of phases, of preparing the thermoplastic polymer forming the article for recycling, to convert it into a base material made from chips containing no pollutants, comprising a phase of eliminating from the chips aqueous microparticles contained therein, a phase of exposing dehydrated chips to an ideal fluidification temperature in order to form a homogeneous product, a phase of deaerating the liquefied product, a phase of extruding the liquefied deaerated product and cooling it to a predetermined temperature to achieve optimum crystallisation, characterised in that a precrystallisation phase is carried out at the same time as the phase of eliminating aqueous microparticles.

2. A process according to Claim 1, characterised in that during the simultaneous phases of eliminating the aqueous microparticles and precrystallisation, the chips are kept moving continuously in dry air.

3. A process according to any one of the preceding claims, characterised in that the simultaneous phases of eliminating aqueous microparticles and precrystallisation are carried out by means of blowing in, in counter-current, dry air having a predetermined level of humidity, a predetermined temperature and a predetermined flow rate.

4. A process according to any one of the preceding claims, characterised in that the dry air has a dew point of between -65° and -35°C, a temperature of between 90 and 160°C and a flow rate of between 3 and 12 cubic metres per hour for each kilogram of chips.

5. A process according to any one of the preceding claims, characterised in that the phases of preparing the thermoplastic polymer comprise at least one phase of mechanically separating the chips from the powder created during their production by means of a low-pressure sifting operation.

6. A process according to any one of the preceding claims, characterised in that, after the simultaneous phases of eliminating the aqueous microparticles and precrystallisation, the particles are transferred in metered manner while still being continuously exposed to the presence of dry air, at least until the phase in which they are exposed to the fluidification temperature.

7. A process according to any one of the preceding claims, characterised in that during the fluidification, deaeration and extrusion phases, the homogenous product undergoes a practically continuous mixing operation at a predetermined temperature and a predetermined pressure.

8. A process according to any one of the preceding claims, characterised in that during the mixing operation the homogeneous product has a constant level of liquidity.

9. A process according to any one of the preceding claims, characterised in that during a first mixing phase the homogeneous product is subjected to a pressure P1 and a temperature T1, during a second mixing phase it is subjected to a pressure P2 and a temperature T2 which are lower than the said pressure P1 and the said temperature T1, and during a third phase it is subjected to a pressure P3 higher than P2 but lower than P1 and a temperature T3 higher than the temperatures T2 and T1.

10. A process according to any one of the preceding claims, characterised in that the phase of deaerating the product is carried out in the presence of a pressure and a temperature equal to P2 and T2.

11. A process according to any one of the preceding claims, characterised in that the extrusion phase is carried out in the presence of a pressure P4 higher than P1, P2 and P3 and at a temperature T4 higher than T1, T2 and T3.

12. A process according to any one of the preceding claims, characterised in that the thermoplastic polymer is a saturated polyester resin, or more precisely ethylene polyterephthalate or one of the corresponding derivatives.

13. An installation for recycling an article made of a thermoplastic polymer, comprising at least one machine for carrying out the heat treatment (54) and at least one machine for extruding the thermoplastic polymer (1), which has an inlet orifice (2) and an outlet orifice (3) for the thermoplastic polymer, heating means (5) for melting the thermoplastic polymer to a predetermined level of liquidity, means for mixing and feeding (6) the thermoplastic polymer from the inlet orifice (2) towards the outlet orifice (3), close to which there is arranged a die (4), and means for deaerating the polymer (7) which are arranged between the inlet orifice (2) and the outlet orifice (3) and a metering device (51) transferring the chips of thermoplastic polymer to the said extrusion machine (1), characterised in that the installation comprises a drying device (55) from which dry air having a predetermined level of humidity, a predetermined temperature and a predetermined flow rate is blown into the said heat treatment machine (54), through a channel (56) opening into the said heat treatment machine (54), from the side opposite the inlet (53) of the said heat treatment machine (54) such that the chips of thermoplastic polymer are continuously exposed to a counter-current of dry air having a predetermined level of humidity, a predetermined temperature and a predetermined flow rate.

14. An installation according to Claim 13, characterised in that the said drying device (55), the at least one heat treatment machine (54), the at least one machine for extruding the thermoplastic polymer (1) and the metering device (51) are connected in air-tight manner.

15. An installation according to Claim 13 or 14, characterised in that blades (58) are provided in the at least one heat treatment machine (54) to ensure continuous mixing of the said chips.

16. An installation according to one of Claims 13 to 15, characterised in that the mixing and feeding means (6) are defined by a variable-pitch extrusion screw (8) in order to vary the feed rate and the pressure of the thermoplastic polymer (9) between the inlet orifice (2) and the deaerating means (7) and between the deaerating means (7) and the outlet orifice (3).

17. An installation according to Claim 16, characterised in that the extrusion screw (8) has a first zone comprising members for controlled feeding of the thermoplastic polymer (9), a second zone comprising members for depositing and first members for transporting (10) the thermoplastic polymer, a third zone comprising members for deaerating the thermoplastic polymer (11), and a fourth zone comprising second members for transporting (12) the deaerated thermoplastic polymer towards the die.

18. An installation according to one of Claims 13 to 17, characterised in that the members for controlled feeding (9) are defined by a helical channel (13) communicating with the inlet orifice (2).

19. An installation according to Claim 17, characterised in that the members for depositing comprise an arcuate wall (14) arranged on the screw, from which the members for transporting (10) extend.

20. An installation according to Claim 19, characterised in that the members for transporting (10) have a thread (15) defining a pitch P1 of the said screw and a depth of the channel in the cylinder which decreases progressively towards the deaerating members (11).

21. An installation according to one of Claims 19 to 20, characterised in that the members for deaerating (11) comprise an annular projection (16) followed by a chamber for expansion (17) of the thermoplastic polymer comprising a degassing device (18) for expelling gases produced in the channel during feeding of the thermoplastic polymer.

22. An installation according to one of Claims 19 to 21, characterised in that the second members for transporting (12) comprise a thread (19) defining a pitch P2 of the screw and a depth of the channel in the cylinder which decreases progressively towards the die (4).

23. An installation according to one of Claims 19 to 22, characterised in that the pitch P1 of the extrusion screw (8) determines a feed rate of the thermoplastic polymer which is smaller than the feed rate determined by the pitch P2 of the extrusion screw (8).

24. An installation according to one of Claims 19 to 23, characterised in that the said heating means (5) establish a different temperature between the said first and fourth zones of the said extrusion screw (8).

25. An installation according to one of Claims 19 to 24, characterised in that the said heating means (5) are high-frequency magnetic inductors.

## Patentansprüche

1. Verfahren zur Rezyklierung von aus einem thermoplastischen Polymer bestehenden Erzeugnissen, aufweisend mehrere Phasen zur Aufbereitung des thermoplastischen Polymers, das den Gegenstand der Rezyklierung bildet, um es in ein Grundprodukt umzuwandeln, das aus Spänen besteht, die frei von umweltverschmutzenden Mitteln sind, aufweisend eine Phase zur Entfernung der wässerigen Mikropartikel aus den Spänen, eine Phase zur Einwirkung einer optimalen Verflüssigungstemperatur auf die dehydratisierten Späne, um ein homogenes Produkt zu bilden, eine Phase zur Entlüftung des verflüssigten Produkts, und eine Phase zur Extrusion des verflüssigten und entlüfteten Produkts, und zur Abkühlung des Produkts auf eine vorgegebene Temperatur, um eine optimale Kristallisation zu erreichen, dadurch gekennzeichnet, daß gleichzeitig mit der Phase zur Entfernung der wässerigen Mikropartikel eine Vorkristallisationsphase ausgeführt wird.

2. Verfahren gemäß Anspruch 1, dadurch gekennzeichnet, daß während der Phasen zur Entfernung der wässerigen Mikropartikel und zur gleichzeitigen Vorkristallisation die Späne in trockener Luft kontinuierlich in Bewegung gehalten werden.

3. Verfahren gemäß irgendeinem der vorhergehenden Ansprüche, dadurch gekennzeichnet, daß die Phasen zur Entfernung der wässerigen Mikropartikel und zur gleichzeitigen Vorkristallisation durch Einblasen, im Gegenstrom, von trockener Luft mit einem vorgegebenen Feuchtigkeitsgrad, einer vorgegebenen Temperatur, und einer vorgegebenen Strömungsrate ausgeführt werden.

4. Verfahren gemäß irgendeinem der vorhergehenden Ansprüche, dadurch gekennzeichnet, daß die trockene Luft einen Taupunkt zwischen -65°C und -35°C, eine Temperatur zwischen 90 und 160°C, und eine Strömungsrate zwischen 3 und 12 Kubikmeter pro Stunde für jedes Kilogramm Späne aufweist.

5. Verfahren gemäß irgendeinem der vorhergehenden Ansprüche, dadurch gekennzeichnet, daß die Phasen zur Aufbereitung des thermoplastischen Polymers mindestens eine Phase zur mechanischen Trennung der Späne von dem im Laufe ihrer Produktion erzeugten Pulver durch einen Unterdrucksiebvorgang aufweisen.

6. Verfahren gemäß irgendeinem der vorhergehenden Ansprüche, dadurch gekennzeichnet, daß nach den Phasen zur Entfernung der wässerigen Mikropartikel und zur gleichzeitigen Vorkristallisation die Partikel auf dosierte Weise befördert werden, wobei sie zugleich kontinuierlich trockener Luft ausgesetzt werden, zumindest bis zu der Phase, in der die Verflüssigungstemperatur auf sie einwirkt.

7. Verfahren gemäß irgendeinem der vorhergehenden Ansprüche, dadurch gekennzeichnet, daß im Laufe der Phasen zur Verflüssigung, Entlüftung und Extrusion das homogene Produkt einem praktisch kontinuierlichen Mischvorgang bei einer vorgegebenen Temperatur und einem vorgegebenen Druck unterworfen wird.

8. Verfahren gemäß irgendeinem der vorhergehenden Ansprüche, dadurch gekennzeichnet, daß im Laufe des Mischvorgangs das homogene Produkt einen konstanten Fluiditätsgrad aufweist.

9. Verfahren gemäß irgendeinem der vorhergehenden Ansprüche, dadurch gekennzeichnet, daß das homogene Produkt im Laufe einer ersten Mischphase einem Druck P1 und einer Temperatur T1 ausgesetzt wird, im Laufe einer zweiten Mischphase einem Druck P2 und einer Temperatur P2 ausgesetzt wird, die niedriger als der Druck P1 und die Temperatur T1 sind, und im Laufe einer dritten Phase einem Druck P3 ausgesetzt wird, der höher als P2, aber niedriger als P1 ist, und einer Temperatur T3 ausgesetzt wird, die höher als die Temperaturen T2 und T1 ist.

10. Verfahren gemäß irgendeinem der vorhergehenden Ansprüche, dadurch gekennzeichnet, daß die Phase zur Entlüftung des Produkts bei einem Druck und einer Temperatur, die gleich P2 bzw. T2 sind, verwirklicht wird.

11. Verfahren gemäß irgendeinem der vorhergehenden Ansprüche, dadurch gekennzeichnet, daß die Extrusionsphase bei einem Druck P4, der höher als P1, P2 und P3 ist, und bei einer Temperatur T4, die höher als T1, T2 und T3 ist, verwirklicht wird.

12. Verfahren gemäß irgendeinem der vorhergehenden Ansprüche, dadurch gekennzeichnet, daß das thermoplastische Polymer ein gesättigtes Polyesterharz, oder genauer ein Äthylenpolyterephthalat oder eines der entsprechenden Derivate ist.

13. Anlage zur Rezyklierung eines aus einem thermoplastischen Polymer bestehenden Erzeugnisses, aufweisend mindestens eine Maschine (54), um die Wärmebehandlung auszuführen, und mindestens eine Maschine (1) zur Extrusion des thermoplastischen Polymers, umfassend eine Eingangsöffnung (2) und eine Ausgangsöffnung (3) für das thermoplastische Polymer, Erhitzungsmittel (5) zur Schmelzung des thermoplastischen Polymers bis zu einem vorgegebenen Fluiditätsgrad, Mittel (6) zum Mischen und zum Befördern des thermoplastischen Polymers von der Eingangsöffnung (2) nach der Ausgangsöffnung (3), in deren Nähe eine Düse (4) angeordnet ist, und Mittel (7) zur Entlüftung des Polymers, die zwischen der Eingangsöffnung (2) und der Ausgangsöffnung (3) angeordnet sind, und eine Dosiervorrichtung (51), die die Späne aus thermoplastischem Polymer nach der Extrusionsmaschine (1) befördert, dadurch gekennzeichnet, daß die Anlage eine Trocknungsvorrichtung (55) umfaßt, ab der trockene Luft mit einem vorgegebenen Feuchtigkeitsgrad, einer vorgegebenen Temperatur, und einer vorgegebenen Strömungsrate über einen Kanal (56), der auf der zu dem Eingang (53) der Wärmebehandlungsmaschine (54) entgegengesetzten Seite in die Wärmebehandlungsmaschine (54) mündet, in die Wärmebehandlungsmaschine (54) eingeblasen wird, so daß die Späne aus thermoplastischem Polymer kontinuierlich einem Gegenstrom aus trockener Luft mit einem vorgegebenen Feuchtigkeitsgrad, einer vorgegebenen Temperatur, und einer vorgegebenen Strömungsrate ausgesetzt werden.

14. Anlage gemäß Anspruch 13, dadurch gekennzeichnet, daß die Trocknungsvorrichtung (55), die mindestens eine Wärmebehandlungsmaschine (54), die mindestens eine Extrusionsmaschine (1) für das thermoplastische Polymer, und die Dosiervorrichtung (51) luftdicht miteinander verbunden sind.

15. Anlage gemäß dem Anspruch 13 oder 14, dadurch gekennzeichnet, daß Schaufeln (58) in der mindestens einen Wärmebehandlungsmaschine (54) vorgesehen sind, um eine kontinuierliche Mischung der Späne sicherzustellen.

16. Anlage gemäß einem der Ansprüche 13 bis 15, dadurch gekennzeichnet, daß die Misch- und Beförderungsmittel (6) durch eine Extrusionsschnecke (8) mit variabler Steigung definiert sind, im Hinblick auf die Variation der Beförderungsgeschwindigkeit und des Drucks des thermoplastischen Polymers (9) zwischen der Eingangsöffnung (2) und den Entlüftungsmitteln (7) und zwischen den Entlüftungsmitteln (7) und der Ausgangsöffnung (3).

17. Anlage gemäß Anspruch 16, dadurch gekennzeichnet, daß die Extrusionsschnecke (8) eine erste Zone aufweist, die Organe (9) für die kontrollierte Zuführung des thermoplastischen Polymers umfaßt, und eine zweite Zone aufweist, die Organe (10) für die Ablagerung und erste Organe für den Transport des thermoplastischen Polymers umfaßt, sowie eine dritte Zone aufweist, die Organe (11) für die Entlüftung des thermoplastischen Polymers umfaßt, und eine vierte Zone aufweist, die zweite Organe (12) für den Transport des entlüfteten thermoplastischen Polymers nach der Düse umfaßt.

18. Anlage gemäß einem der Ansprüche 13 bis 17, dadurch gekennzeichnet, daß die Organe (9) für die kontrollierte Zuführung durch einen schraubenförmigen Kanal (13) definiert sind, der mit der Eingangsöffnung (2) in Verbindung steht.

19. Anlage gemäß Anspruch 17, dadurch gekennzeichnet, daß die Ablagerungsorgane eine auf der Schnecke angeordnete, bogenförmige Wand (14) aufweisen, ab der sich die Transportorgane (10) erstrecken.

20. Anlage gemäß Anspruch 19, dadurch gekennzeichnet, daß die Transportorgane (10) ein Gewinde (15) aufweisen, das eine Steigung P1 der Schnecke definiert, und eine Tiefe des Kanals des Zylinders definiert, die bei Annäherung an die Entlüftungsorgane (11) in progressiver Weise abnimmt.

21. Anlage gemäß einem der Ansprüche 19 bis 20, dadurch gekennzeichnet, daß die Entlüftungsorgane (11) einen ringförmigen Vorsprung (16) aufweisen, auf den eine Ausdehnungskammer (17) für das thermoplastische Polymer folgt, die eine Entgasungsvorrichtung (18) für die Austreibung der im Laufe der Beförderung des thermoplastischen Polymers in dem Kanal erzeugten Gase umfaßt.

22. Anlage gemäß einem der Ansprüche 19 bis 21, dadurch gekennzeichnet, daß die zweiten Transportorgane (12) ein Gewinde (19) aufweisen, das eine Steigung P2 der Schnecke definiert, und eine Tiefe des Kanals des Zylinders definiert, die bei Annäherung an die Düse (4) in progressiver Weise abnimmt.

23. Anlage gemäß einem der Ansprüche 19 bis 22, dadurch gekennzeichnet, daß die Steigung P1 der Extrusionsschnecke (8) eine Beförderungsgeschwindigkeit des thermoplastischen Polymers bestimmt, die niedriger als die durch die Steigung P2 der Extrusionsschnecke (8) bestimmte Beförderungsgeschwindigkeit ist.

24. Anlage gemäß irgendeinem der Ansprüche 19 bis 23, dadurch gekennzeichnet, daß die Erhitzungsmittel (5) eine verschiedene Temperatur in der ersten und vierten Zone der Extrusionsschnecke (8) hervorrufen.

25. Anlage gemäß einem der Ansprüche 19 bis 24, dadurch gekennzeichnet, daß die Erhitzungsmittel (5) magnetische Hochfrequenzinduktoren sind.
